# EUROPEAN PATENT SPECIFICATION

(11) **EP 0 765 799 B1**
(45) Date of publication and mention of the grant of the patent: **22.12.1999**
(21) Application number: 96115220.4
(22) Date of filing: 23.09.1996
(51) Int. Cl.: B62K 3/00, B62K 5/00, B62K 5/08

(54) **Four-wheel pedal vehicle**
Vier-Räder Tretkurbelfahrzeug
Véhicule à pédale avec quatre roues

(30) Priority: 29.09.1995 IT UD950188
(43) Date of publication of application: 02.04.1997
(73) Proprietor: Cencigh, Paolo, 33010 Reana del Rojale (UD) (IT)
(72) Inventor: Cencigh, Paolo, 33010 Reana del Rojale (UD) (IT)
(74) Representative: Petraz, Gilberto Luigi

(56) References cited:
- WO-A-84/00338
- DE-U- 9 204 069
- FR-A- 665 281
- GB-A- 2 143 185

## Description

This invention concerns a four-wheel pedal vehicle, as set forth in the main claim.

To be more exact, the invention concerns a four-wheel vehicle of a "kart" type which uses the propulsive thrust exerted by the user on a pedal crank and has a transmission and gearing-down system which employs cycle components suitably adapted for this specific use.

The vehicle according to the invention is provided for use of a sporting type or professional type or for competitions and for normal physical activity of any user in his spare time.

The state of the art, such as document GB-A-2 143 185, covers various types of vehicles with pedals which are used for sporting activities or activities which can be compared to an activity of a competition type, or else for simple physical exercise of any user in his spare time.

In particular, the field of vehicles intended for sporting activities covers the design of prototypes for human propulsion, which in some cases have later been developed in mass production and have been configured for the attainment of high speeds and/or other special performances.

These particular means for human propulsion normally arrange that the cyclist takes up a steering position such that he is at least partly extended on his stomach or advantageously on his back with his face upwards so that he exerts a great thrust on the pedals and makes use of the contrast exerted by his back against suitable supporting means.

These human propulsion means have a small front surface and therefore reach greater speeds, given an equal power developed by the cyclist.

These means of the state of the art are also often equipped with frames having a wing-shaped profile and a modest actual front surface as defined by the product of the multiplication of the coefficient of aerodynamic resistance by the actual frontal surface.

Among the other types there are vehicles moved by human propulsion which are called "vectors" and are provided for achieving record speeds; they consist generally of frames with three wheels, of which two are front wheels.

All the pedal means with two or three wheels of the state of the art are normally difficult to steer and have difficulties as regards stability and safety owing to the centre of gravity being generally too high.

Moreover, the means of the state of the art often entail difficulties for the user in mounting and descending from the means.

Furthermore, these means normally include front crown wheels of great sizes which restrict the visibility and prevent the achievement of efficient ratios except by impairing the gradual nature of the change from one gear to another.

The present applicant is not aware of the existence of four-wheel pedal vehicle of a "kart" type according to the invention which employ cycle components substantially similar, with suitable adaptations, to the components used in normal pedal means and capable of being used for mass production and for the obtaining of speeds and performances comparable to those of the common two-wheel pedal vehicles.

The present applicant has designed, tested and embodied this invention so as to obtain this four-wheel innovatory pedal vehicle.

This invention is set forth and characterised in the main claim, while the dependent claims describe variants of the idea of the main embodiment.

The purpose of the invention is to embody a four-wheel vehicle of a "kart" type which has a propulsion system with pedals and a transmission and gearing-down system which employs cycle components substantially like those of a common pedal vehicle.

The vehicle according to the invention comprises a frame made with a central carrying beam, to which are connected a pair of rear half-shafts and a front shaft to which respective wheels are fitted.

To this central carrying beam are also secured the carrying elements for the fitting of the brake assembly and of the assembly supporting the seat assembly and also all the accessories and further components required for the movement, such as the support for the pedals, the support for the change gear, the steering pivot, etc.

The seat assembly is rigidly fixed to the frame and is associated with means which adjust the height and inclination and which enable the seat to be positioned according to the requirements of the individual user.

This seat assembly advantageously has an ergonomic conformation so as to provide an at least partly extended seated position, can be associated with linings and/or padding and can include personalising and special finishing elements.

The zone of the change between the seat part and the seatback part of the seat assembly is advantageously positioned close to the almost horizontal plane joining the front shaft to the rear half-shafts.

This enables a seated position to be obtained which is characterised by a very low centre of gravity, and this situation entails a great stability of trim, a better road holding capacity during steering and braking and also easier access when ascending onto and descending from the vehicle.

The propulsion means comprise a pedal crank associated with a chain transmission cooperating with a change gear assembly.

The change gear assembly is substantially conventional and comprises at least one frontal crown wheel associated with the pedal crank and a plurality of crown wheels, which are arranged in a substantially central position and can be actuated individually by the user by manual adjustment according to the conditions and slope of the ground.

According to a variant, the change gear assembly comprises a plurality of frontal crown wheels which can be actuated individually by the user by means of controls located on the steering assembly.

The movement received by the change gear assembly is transmitted to two crown wheels, which are arranged on the two sides of the frame and are solidly fixed to each other and cooperate with respective chains for transmission of the motion to the rear wheels.

These two crown wheels have a double function; their first function is to obtain a further gearing-up of the motion in addition to that already obtained by the crown wheels of the change gear assembly.

This double gearing-up of the motion, of which the first is according to a ratio which can be adjusted by the user, whereas the second is in this case at a fixed ratio, enables crown wheels of a small size to be used without thereby affecting the number of ratios and the reciprocal closeness of those ratios to each other.

The second function of those two crown wheels is to transmit the motion to the rear differential transmission gear consisting of two crown wheel/free wheel assemblies solidly fixed to the rear half-shafts.

These rear transmission assemblies receive the thrust on the two substantially centrally arranged crown wheels and transfer that thrust to the two rear powered wheels by means of the half-shafts.

This transfer takes place in a uniform manner in the event of straight running of the vehicle or of equal adherence of the two wheels to the ground or else in a differentiated manner in the event of a curved movement or of different values of adherence of the two powered wheels to the ground.

This differentiated transfer of movement takes place owing to the free wheels placed between the crown wheel and each half-shaft since these free wheels cause the transfer of the motive torque always to the wheel which is rotating more slowly, whereas the other wheel rotates idly.

This transmission assembly provides also a further gearing-up of the motion and makes possible the obtaining of very great options and functionality by the change gear assembly.

To the vehicle according to the invention it is possible to fit auxiliary elements such as sails for an additional thrust provided by the wind, lateral floats secured to the half-shafts for conversion of the vehicle into a watercraft, accessory means for transporting small objects, and various frames for improving the aerodynamics and/or protecting the user from weathering.

Moreover, depending on the type of use, with regard to the ground and the environmental conditions for instance, various contrivances may be provided such as, for instance, the use of solid tyres, instead of the normal pneumatic tyres with an air chamber, so as to avoid punctures, the use of special forms of the seat assembly and/or of the steering assembly or yet other means.

The attached figures are given as a non-restrictive example and show a preferred embodiment of the invention as follows:-
- Fig.1: gives a side view of the four-wheel pedal vehicle according to the invention;
- Fig.2: is a plan view of the vehicle of Fig.1;
- Fig.3: is a rear view of the rear differential transmission gear of the pedal vehicle according to the invention;
- Fig.4: is a plan view of the hub-holder assembly of the pedal vehicle according to the invention;
- Fig.5: shows a section of the central power distribution assembly of the pedal vehicle according to the invention;
- Fig.6: is a plan view of the vehicle of Fig.2 while being steered.
- Fig.7: is a perspective view of the pedal vehicle according to the invention.

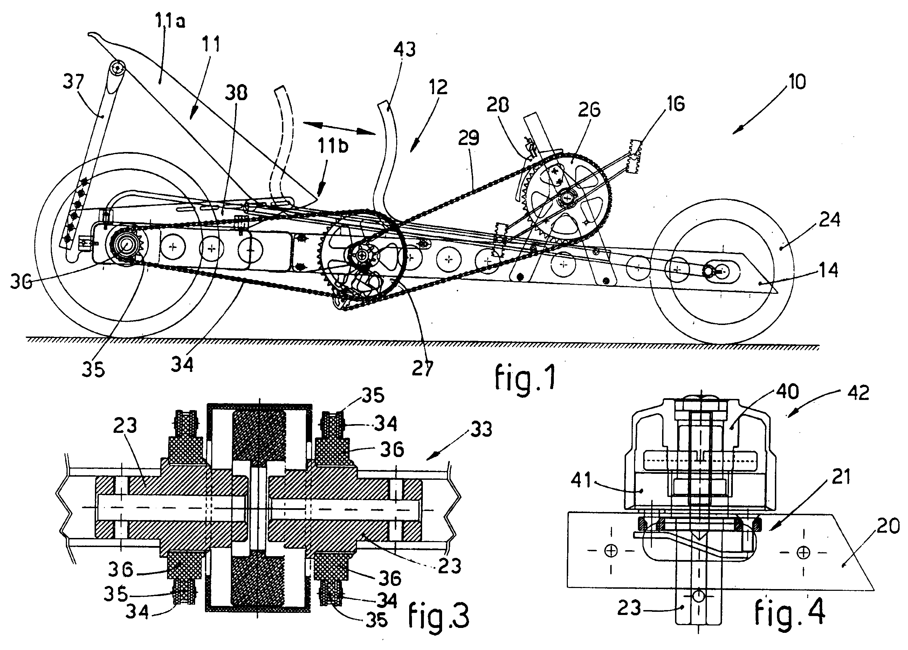

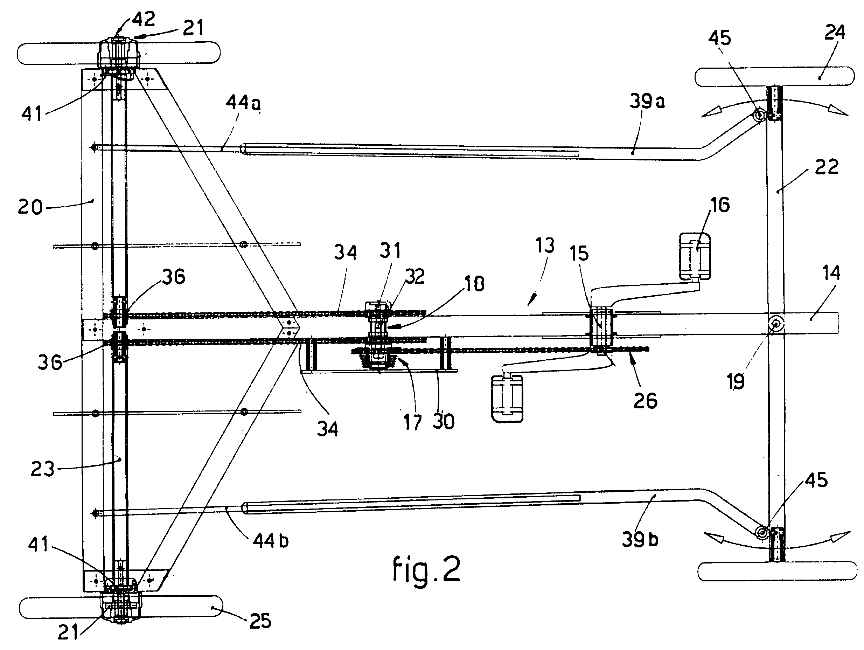

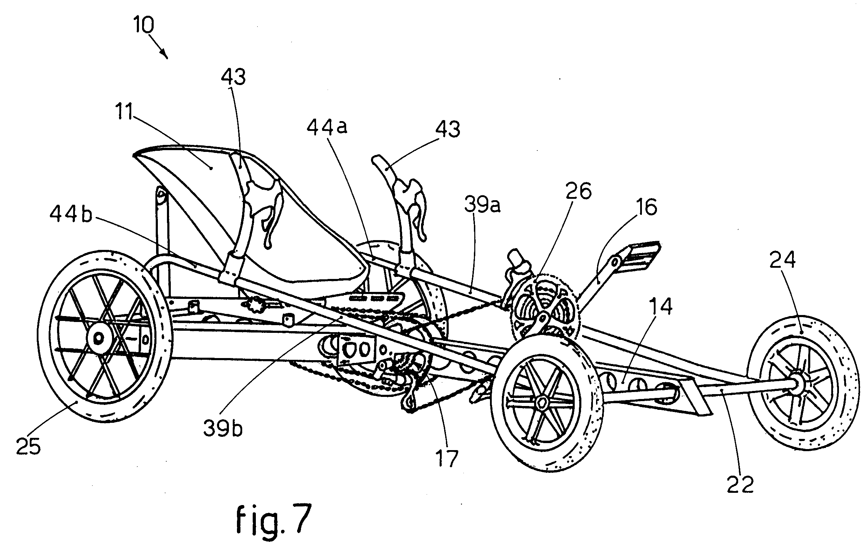

Figs. 1 and 2 show respective side and plan views of a four-wheel pedal vehicle 10 according to the invention, while the fig. 7 shows a perspective view of the vehicle 10 itself.

For the sake of convenience of illustration Fig.2 does not show a seat assembly 11 and shows only partly a steering assembly 12.

The four-wheel pedal vehicle 10 comprises a frame 13 consisting of a central carrying beam 14 embodied with a metallic section or another material and advantageously possessing excellent characteristics of light weight and strength.

The central beam 14 is pre-arranged for fixture of all the accessories and components required for efficient use of the vehicle 10, such as a support 15 for pedals 16, a change gear assembly 17, a support for a central power distribution assembly 18, a steering pivot 19, etc.

A structure 20 consisting of metallic sections and having a substantially triangular or trapezoidal shape is associated with the rear of the central beam 14 and bears the seat assembly 11 and a rear brake assembly 21.

To the opposite ends of the central beam 14 are connected a front shaft 22 and a pair of rear half-shafts 23, on which are installed the respective steering wheels 24 and powered wheels 25.

The seat assembly is shaped to provide for the user a seated position characterised by a very low centre of gravity so as to ensure the stability of, and ability to steer, the vehicle in all driving conditions, together with easy mounting thereonto and descent therefrom.

The position of the change from the seatback portion 11a to the seat portion 11b of the seat assembly 11 is located substantially in the vicinity of the almost horizontal plane joining the front shaft 22 and the rear half-shafts 23.

The seat assembly 11 is associated with pairs of supporting bars 37 and 38 which enable the seat assembly 11 to be adjusted for height, slope and length.

The pedals 16 are fitted to a support 15, the position of which along the central beam 14 can be adjusted advantageously according the the user's requirements.

The position of levers 43 which operate the steering assembly 12 can also be adjusted advantageously as desired by the user.

The pedals 16 cooperate with a change gear assembly that comprises in this case a first front crown wheel 26 and a plurality of crown wheels 27 located at a substantially intermediate position along the vehicle 10 in cooperation with the central power distribution assembly 18.

The intermediate crown wheels 27 are secured to the central power distribution assembly 18 and can be actuated individually by hand by the user in a substantially conventional way by means of controls located on the actuation levers 43 but not shown here in detail.

A dérailleur assembly 28 to displace a chain 29 is included in cooperation with the first front crown wheel 26, while on the outer side of the outermost intermediate crown wheel 27 is located a supporting element 30, which is secured to the central beam 34 and bears the change gear assembly 17.

This supporting element 30 may also have the task of protecting the intermediate crown wheels 27.

Motion is transmitted by the specific intermediate crown wheel 27 selected by the user to a pair of first gearwheels 31 solidly fixed to each other through a hub 32 and arranged on opposite sides of the central beam 14.

These first gearwheels 31 together with the hub 32 form the central power distribution assembly 18 and have the purpose of transmitting the motion from the change gear assembly 17 to a rear differential gear assembly 33.

The first gearwheels 31 perform a second gearing-up of the motion at a preset ration in relation to their diameter, thus enabling a great number of changes of gear to be obtained with limited stages and with a broad option and range of ratios.

Each of the first gearwheels 31, by means of the respective chains 34, actuates a mating second gearwheel 35 consisting of a toothing solidly fixed to a free wheel 36 associated with the respective rear half-shaft 23.

The thrust equally distributed to the two first gearwheels 31 is eqally divided and transmitted to the rear half-shafts 23 where the vehicle 10 is running straight or where the powered wheels 25 adhere equally to the ground.

Instead, where the vehicle 10 is running along a curved path or where the two powered wheels 25 adhere unequally to the ground, the motive torque is transmitted to the wheel 25 on the inside of the curve or analogously to the wheel 25 adhering more to the ground, owing to the inclusion of the free wheels 36.

The rear brake assemblies 21, which are actuated mechanically in a substantially conventional way by cycle-type levers and comprise conventional drum or disk systems 41, are fitted to the structure of the frame 20 on the powered wheels 25.

Each rear brake assembly 21 is secured to, and cooperates with, the respective rear wheel-hub 42 assembly, one of which is shown in detail in Fig.4 and supports the end of the respective half-shaft 23 with the relative wheel-hub 40 which secures the respective powered wheel 25.

The steering assembly 12 comprises actuation levers 43 fixed to frontal levers 39a and 39b, the positioning of which can be adjusted according to the specific ergonomic position required.

The frontal levers 39a, 39b are secured to the front shaft 22 by pivots 45 and are bent inwards so as not to come into contact with the steering wheels 24 when the vehicle is being steered fully to the right or left.

Respective guides 44a and 44b slide within the frontal levers 39a, 39b telescopically in the direction 46 and are hinged to the rear upright of the trapezoidal structure 20 of the frame 13; these guides 44a, 44b have the function of guiding and keeping in position the steering assembly 12;

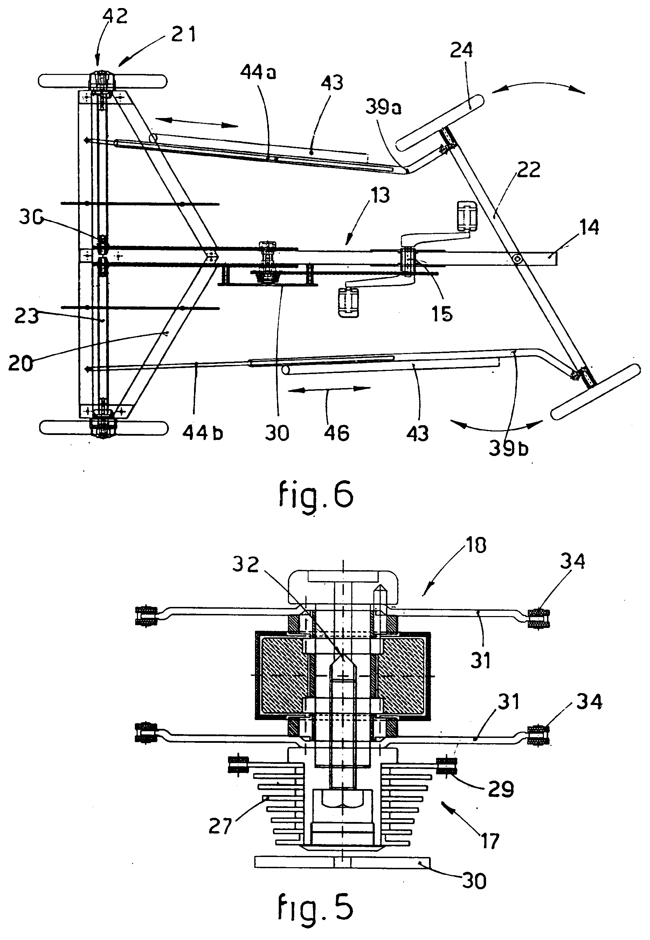

As shown in Fig.6, if the lefthand actuation lever 43 is actuated by hand, the frontal lever 39a slides on the guide 44a and the vehicle 10 is therefore steered to the left with an oscillation of the front shaft 22 on the central steering pivot 19; at the same time the frontal lever 39b and the righthand actuation lever 43 fixed thereto slide forward; the opposite action takes place for steering to the right.

## Claims

1. Four-wheel pedal vehicle (10) which is used for sporting activities and/or competitive racing or otherwise and comprises a basic frame (13) consisting at least of one central carrying beam (14) connected to a rear triangular or trapezoidal structure (20), the rear structure (20) supporting at least a seat assembly (11) and a rear brake assembly (21), to the central carrying beam (14) there being secured at least one pedal assembly (16), a steering assembly (12), a change gear assembly (17) and a central power distribution assembly (18), the central carrying beam (14) cooperating at its respective ends with a front shaft (22) bearing front directional wheels (24) and a pair of rear half-shafts (23) bearing rear powered wheels (25), the rear powered wheels (25) receiving their motion from the central power distribution assembly (18) through a rear differential gear assembly (33) characterised in that the steering assembly (12) comprises actuation levers (43) associated in an adjustable manner with respective frontal levers (39a, 39b) solidly secured to the front shaft (22), the frontal levers (39a, 39b) being able to slide on the outside of respective steering guides (44a, 44b) solidly fixed to the rear structure (20).

2. Four-wheel pedal vehicle (10) as in Claim 1, in which the position of the change from a seatback portion (11a) to a seat portion (11b) of the seat assembly (11) is located substantially in the vicinity of, the almost horizontal plane joining the front shaft (22) to the rear half-shafts (23).

3. Four-wheel pedal vehicle (10) as in Claim 1 or 2, in which the central power distribution assembly (18) is connected to the change gear assembly (17) and comprises a pair of gearwheels (31) solidly fixed together and located on respective opposite sides of the central carrying beam (14), these gearwheels (31) cooperating with respective chains (34) for transmission of motion to the rear differential gear assembly (33).

4. Four-wheel pedal vehicle (10) as in Claim 3, in which the rear differential gear assembly (33) comprises on each side a toothing (35) cooperating with a respective chain (34) and solidly secured to a respective free wheel (36), which is in turn associated with the respective rear half-shaft (23).

5. Four-wheel pedal vehicle (10) as in any claim hereinbefore, in which the positions of the steering assembly (12) and/or of the pedal assembly (16) and/or of the seat assembly (11) can be adjusted independently according to the specific requirements of the user.

## Patentansprüche

1. Pedalfahrzeug (10) mit vier Rädern, das für sportliche Aktivitäten und/oder Wettrennen oder ähnliches verwendet wird und einen Grundrahmen (13) umfaßt, der aus mindestens einem zentralen Träger (14) besteht, der mit einer hinteren dreieckigen oder trapezoiden Struktur (20) verbunden ist, die hintere Struktur (20) mindestens eine Sitzanordnung (11) und eine hintere Bremsanordnung (21) unterstützt trägt, an dem zentralen Träger (14) mindestens eine Pedalanordnung (16), eine Lenkanordnung (12), eine Gangschaltungsanordnung (17) und eine zentrale Kraftverteilungsanordnung (18) angebracht sind, der zentrale Träger (14) an seinen jeweiligen Enden mit einer Vorderachse (22), die die vorderen Richtungsräder (24) trägt und einem Paar hinterer Halbachsen (23), die die hinteren Antriebsräder (25) tragen, zusammenwirkt, die hinteren Antriebsräder (25) von der zentralen Kraftverteilungsanordnung (18) über eine hintere Differentialgetriebeanordnung (33) bewegt werden,
**dadurch gekennzeichnet**, daß
die Lenkanordnung (12) Stellhebel (43) umfaßt, die einstellbar mit den vorderen Hebeln (39a, 39b) verbunden sind, die wiederum fest an der Vorderachse (22) befestigt sind, und die vorderen Hebel (39a, 39b) an den Außenseiten der jeweiligen Steuerführungen (44a, 44b) gleiten können, die wiederum fest an der hinteren Struktur (20) befestigt sind.

2. Pedalfahrzeug (20) mit vier Rädern nach Anspruch 1, bei dem der Übergangsbereich von einem Sitzlehnenbereich (11a) in einen Sitzbereich (11b) der Sitzanordnung (11) im wesentlichen dicht an der beinahe horizontalen Ebene liegt, die die Vorderachse (22) mit den hinteren Halbachsen (23) verbindet.

3. Pedalfahrzeug (10) mit vier Rädern nach Anspruch 1 oder 2, in dem die zentrale Kraftverteilungsanordnung (18) mit der Gangschaltungsanordnung (17) verbunden ist und ein Paar Zahnräder (31) umfaßt, die fest miteinander gekoppelt sind und an jeweils gegenüberliegenden Seiten des zentralen Trägers (14) angeordnet sind und diese Zahnräder (31) jeweils mit Ketten (34) zur Bewegungsübertragung auf die hintere Differentialgetriebeanonrdung (33) zusammenwirken.

4. Pedalfahrzeug (10) mit vier Rädern nach Anspruch 3, in dem die hintere Differentialgetriebeanordnung (33) auf jeder Seite eine Verzahnung (35) aufweist, die jeweils mit einer Kette (34) zusammenwirkt und jeweils fest mit einem Freilauf (36) verbunden ist, der wiederum mit der jeweiligen hinteren Halbachse (23) verbunden ist.

5. Pedalfahrzeug (10) mit vier Rädern nach einem der vorhergehenden Ansprüche, in dem die Positionen der Steueranordnung (12) und/oder der Pedalanordnung (16) und/oder der Sitzanordnung (11) den spezifischen Anforderungen des Benutzers entsprechend unabhängig voneinander eingestellt werden können.

## Revendications

1. Véhicule à pédales avec quatre roues (10) destiné à des activités sportives et/ou à la compétition ou d'autres activités, et comprenant un châssis de base (13) constitué d'au moins une poutrelle porteuse centrale (14) raccordée à une structure arrière triangulaire ou trapézoïdale (20), la structure arrière (20) supportant au moins un ensemble de siège (11) et un ensemble de freinage arrière (21), au moins un pédalier (16), un ensemble de direction (12), un ensemble de changement de vitesse (17) et un ensemble de distribution central (18) étant fixés à la poutrelle porteuse centrale (14), ladite poutrelle porteuse centrale (14) coopérant, à ses extrémités respectives, avec un essieu avant (22) portant des roues avant directrices (24), et avec deux demi-essieux arrière (23) portant des roues arrière motrices (25), les roues arrière motrices (25) recevant leur mouvement de l'ensemble de distribution central (18) par l'intermédiaire d'un ensemble de différentiel arrière (33), caractérisé en ce que l'ensemble de direction (12) comprend des leviers de manoeuvre (43) associés avec une possibilité d'ajustement à des leviers frontaux respectifs (39a, 39b) fixés solidement à l'essieu avant (22), les leviers frontaux (39a, 39b) étant aptes à coulisser sur la surface extérieure de guides de direction (44a, 44b) respectifs fixés solidement à la structure arrière (20).

2. Véhicule à pédales avec quatre roues (10) selon la revendication 1, dans lequel la position du passage d'une partie dossier (11a) à une partie assise (11b) de l'ensemble de siège (11) se situe sensiblement au voisinage du plan quasi horizontal reliant l'essieu avant (22) aux demi-essieux arrière (23).

3. Véhicule à pédales avec quatre roues (10) selon la revendication 1 ou 2, dans lequel l'ensemble de distribution central (18) est raccordé à l'ensemble de changement de vitesse (17) et comprend deux roues de transmission (31) solidarisées l'une à l'autre et situées sur des côtés opposés respectifs de la poutrelle porteuse centrale (14), ces roues de transmission (31) coopérant avec des chaînes respectives (34) en vue de la transmission du mouvement à l'ensemble de différentiel arrière (33).

4. Véhicule à pédales avec quatre roues (10) selon la revendication 3, dans lequel l'ensemble de différentiel arrière (33) comprend, de chaque côté, une denture (35) coopérant avec une chaîne respective (34) et solidement fixée à une roue libre respective (36), laquelle est à son tour associée au demi-essieu arrière respectif (23).

5. Véhicule à pédales avec quatre roues (10) selon l'une quelconque des revendications qui précèdent, dans lequel les positions de l'ensemble de direction (12) et/ou du pédalier (16) et/ou de l'ensemble de siège (11) peuvent être ajustées indépendamment en fonction des besoins spécifiques de l'utilisateur.
